# EUROPÄISCHE PATENTSCHRIFT

(11) **EP 0 862 753 B1**
(45) Veröffentlichungstag und Bekanntmachung des Hinweises auf die Patenterteilung: **07.06.2000**
(21) Anmeldenummer: 96939902.1
(22) Anmeldetag: 22.11.1996
(51) Int. Cl.: G05B 7/02

(54) **VERFAHREN UND VORRICHTUNG ZUM WECHSEL DES PRODUKTIONSPROGRAMMS EINER FÜR DIE HERSTELLUNG MEHRERER ZIELPRODUKTE AUF CHEMISCHEM WEGE EINGERICHTETEN, KONTINUIERLICH BETRIEBENEN ANLAGE**
PROCESS AND DEVICE FOR CHANGING THE PRODUCTION PROGRAM OF A CONTINUOUSLY OPERATED FACILITY SET UP FOR THE PRODUCTION BY CHEMICAL MEANS OF SEVERAL TARGET PRODUCTS
PROCEDE ET DISPOSITIF POUR CHANGER LA GAMME DE PRODUCTION D'UNE INSTALLATION FONCTIONNANT EN CONTINU, CON UE POUR LA PRODUCTION PAR VOIE CHIMIQUE DE PLUSIEURS PRODUITS CIBLES

(30) Priorität: 25.11.1995 DE 19543905
(43) Veröffentlichungstag der Anmeldung: 09.09.1998
(73) Patentinhaber: BASF AKTIENGESELLSCHAFT, 67056 Ludwigshafen (DE)
(72) Erfinder: HISGEN, Bernd, D-67141 Neuhofen (DE); REIMSCHÜSSEL, Eduard, D-67459 Böhl-Iggelheim (DE); ADAM, Reinhard, D-67354 Römerberg (DE)
(86) Internationale Anmeldenummer: EP9605165
(87) Internationale Veröffentlichungsnummer: WO9720257

(56) Entgegenhaltungen:
- EP-A- 0 208 442
- EP-A- 0 429 844
- US-A- 4 910 684

## Beschreibung

Die Erfindung betrifft eine Vorrichtung, mittels derer eine für die Herstellung mehrerer Zielprodukte auf chemischem Wege eingerichtete, kontinuierlich betriebene Produktionsanlage während des Wechsels des Produktionsprogramms von einem Zielprodukt auf ein anderes Zielprodukt mit möglichst geringen Produktverlusten betrieben werden kann, sowie das mit dieser Vorrichtung auszuübende Verfahren.

Die Erfindung betrifft insbesondere eine Produktionsanlage mit einem als Prozeßleitsystem ausgebildeten Meß- und Regelsystem, das mehrere, für die Einhaltung von Sollwerten bestimmte Regelkreise aufweist und mit der erfindungsgemäßen Vorrichtung ausgestattet ist.

Die Erfindung betrifft weiter ein Verfahren und eine Vorrichtung der vorgenannten Art, mit der eine Laständerung einer Produktionsanlage, d.h. ein pro Zeiteinheit geänderter Produktausstoß ohne Veränderung der Produkteigenschaften erreicht werden kann.

Es gibt viele chemische Verfahren, die in kontinuierlich betriebenen Anlagen ausgeübt werden und mit denen wahlweise Produkte unterschiedlicher Eigenschaften hergestellt werden. Solche Anlagen sind z.B. bei der Herstellung von Kunststoffen durch Polymerisation entsprechender Monomerer allgemein üblich, wobei unterschiedliche Produkteigenschaften z.B. dadurch eingestellt werden, daß die typischen Parameter von Polymeren, beispielsweise das Molekulargewicht, d.h. die Kettenlänge der diesen Produkten zugrundeliegenden Fadenmoleküle, die Anzahl und Verteilung von Kettenverzweigungen und die Häufigkeitsverteilung der Kettenlängen (Molekulargewichtsverteilung) verändert werden. Dies wird dadurch erreicht, daß für jedes Produkt bestimmte, unterschiedliche Betriebsbedingungen eingehalten werden. Die Betriebsbedingungen werden in bekannter Weise durch Regler konstant gehalten, die in Regelkreisen wirken. Bei den heute in solchen Anlagen hergestellten Produktgemischen treten eine Vielzahl von weiteren Parametern hinzu. Die molekularen Parameter bestimmen die physikalischen Eigenschaften der Kunststoffe und es kommt daher darauf an, die Betriebsbedingungen für die Einhaltung einer bestimmten Produktspezifikation konstant zu halten.

Die Herstellung eines bestimmten Produkts geschieht in Form sog. Kampagnen, d.h. es wird jeweils ein bestimmtes Produkt auf Vorrat hergestellt, danach erfolgt eine Umstellung der Produktionsanlage zur Herstellung des nächsten Produkts usw. Die Umstellung ist, wie sich aus dem Vorstehenden ergibt, stets mit einem Wechsel der Betriebsbedingungen verbunden. Bei vielen Produktgruppen ist eine mehrfache Umstellung im Verlauf weniger Wochen üblich.

Der Wechsel des Produktionsprogramms bedeutet, daß Temperaturen, Drucke, Strömungsgeschwindigkeiten, Katalysatoren, Zusammensetzung des Reaktionsgemisches und andere Parameter bzw. deren für die einzelnen Regelkreise maßgebliche Sollwerte verändert werden müssen. Dies geschieht üblicherweise nach einem Zeitplan, der jedoch i.a. Entscheidungsspielräume für den Operator (Anlagenbediener), d.h. für logische Entscheidungen enthalten muß und dauert je nach Geschicklichkeit des Operators i.a. 5 bis 20 Stunden oder länger. Die Umstellung wird unabhängig davon, ob ein Prozeßleitsystem oder lediglich ein System autonomer Regelkreise vorhanden ist, durch Eingriffe in die jeweiligen Regelkreise vorgenommen, indem die Sollwerte der einzelnen Regelkreise gemäß dem für jede Produktfolge (d.h. jedes Produktpaar) ausgearbeiteten Zeitplan nach und nach vom Operator verstellt werden.

Da die Anlage während der Umstellung weiterläuft, fallen dabei zwangsweise erhebliche Mengen an Produkten an, die weder mit dem vorhergehenden noch mit dem folgenden Produkt identisch sind (sog. NT-Ware, d.h. nicht typgerechte Ware), deren Eigenschaften sich noch dazu i.a. während der Dauer der Umstellung ändern. Dies bedeutet einen erheblichen wirtschaftlichen Verlust, da NT-Ware nicht oder nicht zum regulären Marktpreis eines eingeführten Produkts abgesetzt werden kann.

Das Gleiche gilt sinngemäß für eine Laständerung des Betriebs: Bei Verringerung oder Erhöhung des Absatzes eines bestimmten Produkts kann eine kontinuierlich betriebene Anlage nur im Notfall abgestellt oder vom Stillstand aus auf die volle Produktionskapazität gebracht werden. Es ist vielmehr üblich, innerhalb bestimmter Grenzen den Durchsatz der Produktionsanlage zu verändern, z.B. die Produktion von einer Minderauslastung bis zur vollen Produktionskapazität zu steigern oder umgekehrt, wobei im Prinzip die gleichen Probleme wie bei einer Produktumstellung auftreten.

Es ist schon bekannt, die Inbetriebnahme bzw. Außerdienststellung von chemischen Anlagen innerhalb eines Prozeßleitsystems mit Hilfe von Datenverarbeitungsprogrammen zu bewerkstelligen. Auch für eine stufenweise Änderung der Betriebsauslastung sind ähnliche Programme vorgeschlagen worden. Diese Programme sind jedoch starr und eignen sich im Prinzip nur für Anlagen, die ein bestimmtes Produkt herstellen, nicht jedoch für Anlagen, die ein variables Produktionsprogramm bewältigen sollen.

Die US 4,910,684 beschreibt eine Fuzzy-Regelung zur automatischen Steuerung eines Drehröstofens in der Anfahrphase. Eine Filteranordnung zur Generierung von Vorgabewerten zeitlich veränderlicher, physikalischer Größen mit stetigen, zeitlichen Abteilungen beliebiger Ordnung für Regel- und Steueranordnungen ist aus EP-A 0 429 844 bekannt. Damit ist eine vorgegebene Sollbahn mit sehr großer Genauigkeit einhaltbar.

Die Erfindung hat sich die Aufgabe gestellt, eine Vorrichtung und ein mit dieser Vorrichtung mögliches Verfahren zu finden, mit deren Hilfe der Umstellungsvorgang von Anlagen mit variablem Produktionsprogramm soweit als möglich verkürzt und insbesondere von der individuellen Geschicklichkeit eines Operators unabhängig gemacht und sicher gestaltet werden kann.

Unmittelbarer Erfindungsgegenstand ist daher eine Vorrichtung zur Veränderung der stationären Betriebsbedingungen einer mit einem als Prozeßleitsystem ausgebildeten Meß- und Regelsystem ausgestatteten und mehrere, für die Einhaltung von Sollwerten bestimmte Regelkreise aufweisenden, kontinuierlich betriebenen Produktionsanlage während des Wechsels des Produktionsprogramms von einem bisher hergestellten Zielprodukt A auf ein anschließend herzustellendes Zielprodukt B, durch Überführung von Sollwerten von Regelkreisen, die der Herstellung von A - oder allgemein, dem Betriebszustand A - zugeordnet sind, in Sollwerte, die der Herstellung von B - oder allgemein, dem Betriebszustand B - zugeordnet sind, die erfindungsgemäß für jeden Regelkreis mindestens einen Speicher für eine frei wählbare Zeitfunktion der Sollwertveränderung und für jede vorgesehene Änderung der Betriebsbedingungen (Produktumstellung von einem bestimmten Produkt A auf ein anderes bestimmtes Produkt B oder Laständerung) mindestens einen Speicher für eine Matrix von Zeitfunktionen von Sollwertveränderungen aufweist.

Die erfindungsgemäße Vorrichtung weist ferner Mittel (Schalter) auf, um die für eine bestimmte Änderung der Betriebsbedingungen bzw. eine bestimmte Änderung des Produktionsprogramms vorgesehene Matrix bei der Veränderung der stationären Betriebsbedingungen bzw. Umstellung auf das vorhandene Meß- und Regelsystem aufzuschalten, d.h. das normalerweise autonome Verhalten des Meß- und Regelsystems zu unterbrechen und während der Dauer der Umstellung von einer übergeordneten Steuereinheit aus zu beeinflussen und insbesondere die Sollwerte der Regelkreise nach dem durch die Matrix festgelegten Programm zu verändern.

Unter "Matrix" wird dabei das für jeden Wechsel von einem bestimmten Produkt A zu einem Produkt B spezifische Bündel von Änderungsfunktionen verstanden. Sowohl der Speicher für die einzelnen Zeitfunktionen wie der für die daraus aufgebauten Matrices kann in Form geeigneter Bauteile oder als vereinbarter zugriffsfähiger Speicherplatz innerhalb eines elektronischen Datenverarbeitungssystems ausgeführt sein.

Zweckmäßig sind ferner ein oder mehrere Speicher für frei wählbare Bedingungen (d.h. Verknüpfungen logischer Operatoren mit Betriebsparametern) vorgesehen, die es ermöglichen, während der Umstellung die Veränderung eines Sollwerts vom Erreichen (oder allgemein: Zustand) eines vorgegebenen Betriebszustandes während der Produktumstellung abhängig machen.

Zweckmäßig sind ferner ein oder mehrere Speicher vorhanden, in denen - anstelle oder zusätzlich zu einer Sollwertveränderung - jeweils eine frei wählbare Zeitfunktion einer Stellgrößenveränderung abgelegt werden kann. Der Speicherinhalt kann bei Bedarf ebenfalls in die Matrix aufgenommen werden, um während einer Änderung des Verfahrensablaufs zu einer gegebenen Zeit unmittelbar - d.h. unter Umgehung des Regelkreises - eine Veränderung einer Stellgröße bzw. eine Veränderung eines zugehörigen Betriebsparameters zu bewirken.

Die vorhandenen Speicher für Zeitfunktionen und Bedingungen bilden eine Bibliothek, deren Bausteine oder Elemente in die für jeden vorkommenden Produktwechsel spezifische Matrix geladen werden und in dieser Form - wiederum als Bibliothek - abgespeichert werden können.

Es ist im allgemeinen nicht erforderlich, die Regelparameter selbst, d.h. die Anpassung eines Reglers an die zugehörige Regelstrecke bzw. sein Zeitverhalten (P,I,D) zu ändern.

Um einen bestimmten Regelkreis dazu einzurichten, daß ein Eingriff möglich ist, also ein Sollwert programmgesteuert verändert werden kann, ist es zweckmäßig, jedem Regler einen eigenen Steuerbaustein zuzuordnen, der die typischen Handlungen eines Operators nachbildet und durch ein übliches EXKLUSIV-ODER-Gatter (d.h. einen körperlich vorhandenen oder softwaremäßg definierten Schalter) ein programmgesteuertes Umschalten der in jedem Regler vorhandenen Betriebsmodi auf Fremdsteuerung ermöglicht.

Der Steuerbaustein weist Nachbildungen der Betriebsarten entsprechend den im Regler verfügbaren Betriebsarten auf, die bei Ansteuerung des Wahlschalters S an deren Stelle treten können und damit den Regler vom normalen, autonomen Betrieb auf Programmbetrieb umschalten. Dabei haben die einzelnen Funktionseinheiten sowohl innerhalb der Reglersteuerung als auch innerhalb des erfindungsgemäßen neuen Steuerbausteins die folgende Bedeutung: W bedeutet den Sollwert, Y die Stellgröße. Es sind ferner in beiden Einheiten Wahlschalter M ("Mode") vorhanden, mit denen eine Umstellung von Automatik- auf Handbetrieb und sog. Kaskadenbetrieb möglich ist, sowie die bei Handbetrieb aktivierbare Steuerfunktion H für "Rampe" oder "Sprungfunktion". Für vereinfachte Bedürfnisse genügt es, den Wahlschalter S ausschließlich auf den Wahlschalter M aufzuschalten und so den Handbetrieb zu simulieren.

Die erforderlichen Steuerbausteine sind leicht mit handelsüblichen Mitteln herzustellen; sie können sowohl als separate Einheiten ausgeführt als auch in Form von Datenverarbeitungsprogrammen innerhalb des Prozeßleitsystems softwaremäßig nachgebildet werden, wobei vorteilhaft ist, daß Prozeßleitsysteme bereits für die softwaremäßige Nachbildung von Reglerfunktionen eingerichtet zu sein pflegen.

Die erfindungsgemäße Vorrichtung eignet sich außer für Änderungen des Produktionsprogramms auch dazu, Laständerungen, d.h. Änderung der Anlagenkapazität, sowie die Inbetriebnahme und Außerdienststellung der damit ausgerüsteten Anlage zu automatisieren, wobei wiederum für jede vorgesehene Laständerung - gegebenenfalls für jedes herzustellende Produkt - sowie die Inbetriebnahme und Außerdienststellung eine spezielle Matrix vorzusehen ist.

Für den praktischen Betrieb werden im Prozeßleitsystem zweckmäßig zwei Matrizen hinterlegt: Eine Matrix umfaßt eine nach einer Anzahl von Schritten definierte Betriebsanweisung für eine Anzahl von n Reglern, die andere eine Anzahl von Bedingungen. Jeder Regler erhält somit Schrittvariable, die frei mit Steuerfunktionen belegbar sind und damit weiterhin willkürliche Eingriffe von außen bei definierten Bedingungen ermöglichen. Beide Matrizen entsprechen somit weitgehend einer fest verdrahteten Schaltung. Die jeweils freigegebenen Variablen, mit ihren Steuerfunktionen als Inhalt, werden interpretiert und zu Signalen konvertiert, die über den Schalter S im Reglerbaustein die vorhandenen Funktionen des Reglers ansteuern.

## Patentansprüche

1. Vorrichtung zur Veränderung der stationären Betriebsbedingungen einer mit einem als Prozeßleitsystem ausgebildeten Meß- und Regelsystem ausgestatteten, mehrere, für die Einhaltung von Sollwerten bestimmte Regelkreise aufweisenden, kontinuierlich betriebenen Produktionsanlage während des Wechsels des Produktionsprogramms von einem bisher hergestellten Zielprodukt A auf ein anschließend herzustellendes Zielprodukt B, durch Überführung von Sollwerten von Regelkreisen, die der Herstellung von A - oder allgemein, dem Betriebszustand A - zugeordnet sind, in Sollwerte, die der Herstellung von B - oder allgemein, dem Betriebszustand B - zugeordnet sind, dadurch gekennzeichnet, daß für jeden Regelkreis mindestens ein Speicher für eine frei wählbare Zeitfunktion der Sollwertveränderung und für jede vorgesehene Änderung der Betriebsbedingungen (Produktumstellung von einem bestimmten Produkt A auf ein anderes bestimmtes Produkt B oder Laständerung) mindestens ein Speicher für eine Matrix von Zeitfunktionen von Sollwertveränderungen vorgesehen ist, sowie Mittel vorhanden sind, um die für eine bestimmte Änderung der Betriebsbedingungen bzw. eine bestimmte Änderung des Produktionsprogramms vorgesehene Matrix bei der Veränderung der stationären Betriebsbedingungen bzw. Umstellung auf das vorhandene Meß- und Regelsystem aufzuschalten, d.h. das normalerweise autonome Verhalten des Meß- und Regelsystems zu unterbrechen und während der Dauer der Umstellung von einer übergeordneten Steuereinheit aus zu beeinflussen und insbesondere die Sollwerte der Regelkreise nach dem durch die Matrix festgelegten Programm zu verändern.

2. Vorrichtung nach Anspruch 1, dadurch gekennzeichnet, daß ein oder mehrere Speicher vorhanden sind, in denen jeweils mindestens eine Bedingungsfunktion abgelegt werden kann, nach der die Veränderung eines Sollwerts während der Umstellung vom Erreichen eines vorgegebenen Betriebszustands abhängig gemacht werden kann.

3. Vorrichtung nach Anspruch 1, dadurch gekennzeichnet, daß mindestens ein Speicher für eine frei wählbare Zeitfunktion einer Stellgrößenveränderung vorhanden ist.

4. Verfahren zur Überführung der stationären Betriebsbedingungen einer mit einem als Prozeßleitsystem ausgebildeten Meß- und Regelsystem ausgestatteten, mehrere, für die Einhaltung von Sollwerten bestimmte Regelkreise aufweisenden, kontinuierlich betriebenen Produktionsanlage, während des Wechsels des Produktionsprogramms, dadurch gekennzeichnet, daß mittels der Vorrichtung gemäß Anspruch 1 das autonome Verhalten des Meß- und Regelsystems unterbrochen wird und während der Dauer der Umstellung von einer übergeordneten Steuereinheit die Sollwerte der Regelkreise nach dem durch die Matrix von Zeitfunktionen von Sollwertveränderungen festgelegten Programm verändert werden.

## Claims

1. Apparatus for changing the steady-state operating conditions of a continuously operated production plant, equipped with a measurement and control system in the form of a process control system and having a plurality of control loops intended for maintaining setpoint values, during a change of the production program from an end product A produced so far to an end product B subsequently to be produced, by converting setpoint values of control loops which are assigned to the production of A, or generally to the operating state A, into setpoint values which are assigned to the production of B, or generally to the operating state B, wherein at least one memory for a freely selectable time function of the change of setpoint value is provided for each control loop and at least one memory for a matrix of time functions of changes of setpoint values is provided for each intended change of the operating conditions (product changeover from a certain product A to another specific product B or load change), and means are present for connecting the matrix intended for a certain change of the operating conditions or a certain change of the production program when the steady-state operating conditions are changed or a changeover to the existing measurement and control system is effected, ie. for interrupting the usually autonomous behavior of the measurement and control system and for influencing it during the changeover from a superior control unit and in particular for changing the setpoint values of the control loops according to the program specified by the matrix.

2. Apparatus as claimed in claim 1, wherein one or more memories are present in which, in each case, it is possible to store at least one condition function according to which the change of a setpoint value during the changeover can be made dependent on the attainment of a predetermined operating state.

3. Apparatus as claimed in claim 1, wherein at least one memory is present for a freely selectable time function of a change of regulated quantity.

4. A process for converting the steady-state operating conditions of a continuously operated production plant, equipped with a measurement and control system in the form of a process control system and having a plurality of control loops intended for maintaining setpoint values, during a change of the production program, wherein, by means of the apparatus as claimed in claim 1, the autonomous behavior of the measurement and control system is interrupted and, during the changeover from a superior control unit, the setpoint values of the control loops are changed according to the program specified by the matrix of time functions of changes of setpoint values.

## Revendications

1. Dispositif pour modifier les conditions stationnaires d'exploitation d'une installation de production fonctionnant en continu, équipée d'un système de mesure et de réglage configuré comme système de commande de processus et présentant plusieurs boucles de régulation définies pour le maintien de valeurs de consigne, pendant le passage du programme de production d'un produit cible A fabriqué jusque-là à un produit cible B à fabriquer ensuite, par passage de valeurs de consigne de boucles de régulation qui sont associées à la fabrication de A ou en général à l'état d'exploitation A, à des valeurs de consigne qui sont associées à la fabrication de B ou en général à l'état d'exploitation B, caractérisé en ce que pour chaque boucle de régulation, il est prévu au moins une mémoire pour une fonction temporelle, librement sélectionnable, de la modification des valeurs de consigne, et, pour chaque modification prévue des conditions d'exploitation (passage d'un produit défini A à un autre produit défini B ou modification de la charge) au moins une mémoire pour une matrice de fonctions temporelles de modification de valeurs de consigne, et en ce qu'il existe des moyens pour passer de la matrice prévue pour une modification définie des conditions d'exploitation resp. pour une modification définie du programme de production lors de la modification des conditions d'exploitation stationnaires resp. lors de la conversion du système existant de mesure et de réglage, c'est-à-dire pour interrompre le fonctionnement, normalement autonome, du système de mesure et de réglage et pour, pendant la durée de la conversion, agir depuis une unité de commande en amont et en particulier pour modifier les valeurs de consigne de la boucle de régulation en fonction du programme défini par la matrice.

2. Dispositif selon la revendication 1, caractérisé en ce qu'il comprend une ou plusieurs mémoires dans chacune desquelles peut être conservée au moins une fonction conditionnelle qui permet, pendant la conversion, de rendre la modification d'une valeur de consigne dépendante de l'établissement d'un état d'exploitation prédéterminé.

3. Dispositif selon la revendication 1, caractérisé en ce qu'il comprend au moins une mémoire pour une fonction temporelle, librement sélectionnable, d'une modification de variable réglante.

4. Procédé de transfert des conditions stationnaires d'exploitation d'une installation de production travaillant en continu, équipée d'un système de mesure et de réglage configuré comme système de commande de processus et présentant plusieurs boucles de régulation définies pour le maintien de valeurs de consigne, pendant la modification du programme de production, caractérisé en ce qu'au moyen du dispositif selon la revendication 1, le comportement autonome du système de mesure et de réglage est interrompu, et en ce que pendant la durée de la conversion, les valeurs de consignes des boucles de régulation sont modifiées par une unité de commande en amont en fonction du programme défini par la matrice des fonctions temporelles de modification des valeurs de consigne.
